# NEW EUROPEAN PATENT SPECIFICATION

(11) **EP 0 561 470 B2**
(45) Date of publication and mention of the opposition decision: **22.08.2001**
(45) Mention of the grant of the patent: 12.06.1996
(21) Application number: 93200778.4
(22) Date of filing: 16.03.1993
(51) Int. Cl.: A22B 3/06

(54) **Method and device for stunning an animal for slaughter**
Verfahren und Vorrichtung zum Betäuben von Schlachttieren
Procédé et dispositif pour l'assomage d'animaux de boucherie

(30) Priority: 16.03.1992 NL 9200487
(43) Date of publication of application: 22.09.1993
(73) Proprietor: STORK R.M.S. B.V., 7131 PG Lichtenvoorde (NL)
(72) Inventor: Te Dorsthorst, Wilhelmus, Antonius, Bernardus, NL-7131 DK LICHTENVOORDE (NL); Pardijs, Hendrik, Jan, NL-7102 AZ WINTERSWIJK (NL)
(74) Representative: Schumann, Bernard Herman Johan

(56) References cited:
- EP-A- 0 019 332
- AU-B- 571 286
- DE-A- 4 037 203
- NZ-A- 201 402
- US-A- 1 935 138

## Description

The invention relates to a method for stunning an animal for slaughter, e.g. a pig, comprising the steps of:
(a) providing the animal for slaughter;
(b) conveying said animal by means of conveying means in the direction of stunning means;
(c) causing a first current pulse to flow throught the neck- and/or head-region of said animal for slaughter to stun said animal;
(d) causing a second current pulse to flow through the body of the animal for slaughter to cause a cardiac arrest;

Also the invention relates to a device for stunning an animal for slaughter, for instance a pig, for application of the method specified herein above, said device comprising;
(a) conveying means for conveying an animal for slaughter;
(b) at least one first electrode to be pressed against the neck- and/or head-region of the animal;
(c) electrical supply means connected to said first electrode for causing a first current pulse to flow through the at least one first electrode through the neck- and/or head-region of the animal;
(d) at least one second electrode to be pressed against the body of the animal, said electrical supply means being also connected to said at least one second electrode for causing a second current pulse to flow via said at least one second electrode throuh the body of the animal to cause cardiac arrest.

Such a method and a device are known from NZ-A-201 402.

The invention has for its object to provide a method and associated device with which an animal for slaughter can be rapidly stunned using simple means, wherein needless suffering is prevented and the quality of the meat is not adversely affected. In addition to achieving effective stunning it is important that the animal remains substantially still after the treatment. This is important in respect of the subsequent treatment which, in accordance with a normal procedure, consists of arranging a chain round one of the hind legs, suspending from the conveyor and subsequently piercing the carotid artery to kill the animal.

Furthermore, the invention has for its object to provide a method and associated device with which the stunning of the animal for slaughter can take place during the transporting of the animal by means of conveying means, such as a restrainer, without the necessity of stopping the transport during the stunning operation. In this connection it should be noted, that for an efficient management of the stunning operation in the abattoir the continuity of the supply of animals to be slaughtered to the conveyor must not be interrupted.

With the above in mind the method according to the invention is characterized by a step (e) of carrying out step (c) in a way such that the first current pulse has a maximum duration of 10 seconds and by steps (c) and (d) being executed during step (b)."

Use of the method according to the invention can very effectively prevent the animal displaying so-called "clonic spasms" and the animal remains virtually motionless while stunning is nonetheless complete.

Particularly effective is the method wherein the second current pulse is caused to flow through the heart region.

This method can for instance be performed such that the second current pulse is caused to flow through the neck- and/or head-region and the heart region of the animal.

The first and the second current pulse can have a duration of a maximum of 10 secs. and preferably a duration of 1-2 secs. The total duration of the first and the second current pulse together is preferably 2,5-3 sees.

The effective voltage of the first current pulse and of the second current pulse is preferably a maximum of 1000 V.

Excellent results are obtained with methods in which the voltage of the first current pulse lies in the order of magnitude of 250 V and that of the second current pulse in the order of magnitude of 125 V.

The first and second current pulse can each consist of an alternating current with a frequency of a maximum of 1000 Hz.

A method in which these frequencies are the same as the mains frequency has the advantage of easy availability.

Attention is drawn to the fact that in general preference will be given to an alternating current.

From EP-A-0 019 332 an apparatus is known in which electrodes adapted to engage the head of an animal to be stunned are movable along a restrainer in a reciprocating fashion. No electrodes engaging the breast or other part of the body of an animal is used.

EP-A-0 021 548 also relates to such a device in which the head electrode said is movable together with the animal carried by the restrainer. No breast electrode is used.

FR-A-2 390 903 relates to a device, in which the electrodes are carried by hingible arms, so that they can more or less follow the movement of an animal during the stunning operation.

The method according to the invention is implemented in material sense with a device for stunning an animal for slaughter, for instance a pig, with application of the method as described above, said device being characterized in that: the first and second electrodes are movable together with said conveying means."

It should be noted that the apparatus known from NZ-A-201 402 for stunning an animal and causing cardiac arrest uses a current flowing through electrodes arranged in the head and the breast region of an animal, respectively. These electrodes are not movable together with a conveyor, but are rather positioned in a fixed stationary position.

With reference to earlier application DE-A-4037203 in Germany, the applicant has voluntarily limited the scope of the present application, and submitted seperate claims for Germany.

While the use of a relatively high voltage can achieve a good stunning, internal bleeding could occur as a side-effect which could adversely affect the quality of the meat. A relatively low voltage for the first and the second current pulses is therefore the objective. In order to further the quality of the stunning, however, the device according to the invention is characterized in a variant by means for lowering the transition resistance between the electrodes and the animal. This ensures that at a determined voltage a desired strength of current can be obtained.

The device according to the invention can be characterized particularly for this purpose by pressing means for pressing the electrodes against the animal with chosen forces.

In order to induce cardiac arrest as effectively as possible the device can have the feature that the third electrode is adapted to be pressed against the thorax region of the animal such that the second current pulse is caused to flow to at least a significant degree through the heart region.

In a specific embodiment the device characterized in that the at least one first electrode is carried by a first carriage which can be moved reciprocally along said conveyor such that said at least one first electrode can make contact with an animal for slaughter carried by said conveyor during the first current pulse having a maximum duration of 10 secs.

Correspondingly, the device may be characterized in that the second electrode is carried by a second carriage which can be moved reciprocally along said conveyour such that said second electrode can make contact with an animal for slaughter carried by said conveyor during the second current pulse having a maximum duration of 10 secs.

In a simple yet effective embodiment, the device is characterized in that said first and second carriages are coupled for simultaneous reciprocating movement along said conveyor.

In yet another embodiment the device is characterized in that said first carriage is also said second carriage.

In yet another embodiment the device is characterized in that said at least one second electrode forms part of the outer surface of said conveyor. It can be practical to use an external electrical contact connected with the power supply for supplying the second current pulse in a way such that said second electrode is connected with the power supply only during a predetermined time interval. The second current pulse is fed to the second electrode only during that interval.

The invention will now be further elucidated with reference to the annexed drawings, wherein:
Figure 1 shows a perspective view of a pig lying on a restrainer, wherein a device according to the invention is shown highly schematically in operating situation; and
figure 2 shows a partly broken away perspective view of a practical embodiment of the device.

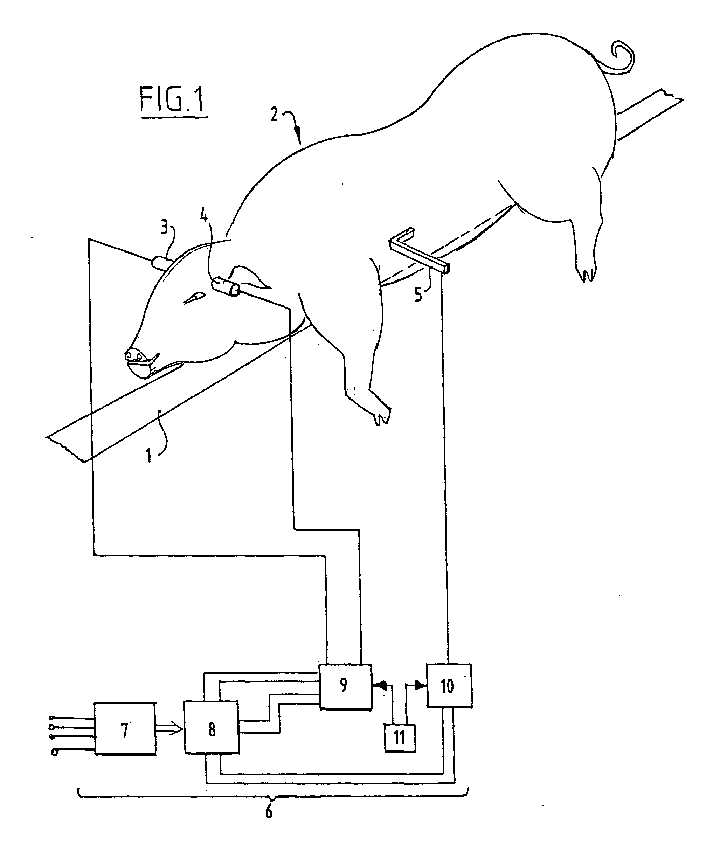

Lying on a conveyor belt 1, a so-called restrainer, is a pig 2 which is to be stunned and slaughtered. According to the invention use is made for this purpose of a number of electrodes, in the embodiment drawn two head electrodes 3, 4 and a breast electrode 5, which are connected to an electrical mains supply device 6 for successively causing to flow a current pulse through the head of the pig 2 via the electrodes 3 and 4 and then causing a second current pulse to flow through the heart region of the animal via the electrode 5 and at least one of both electrodes 3, 4. In figure 1 the reference numeral 7 designates a mains transformer which provides a power supply source 8 with the correct voltage and current. The electrodes 3 and 4 receive current via a first switch 9, while passage of current via the third electrode 5 is controlled by a second switch 10. These switches are controlled by a control unit 11 which ensures that a first current pulse is caused to flow through electrodes 3, 4 followed by a second current pulse via respectively the head electrodes 3 and/or 4 and the breast electrode 5.

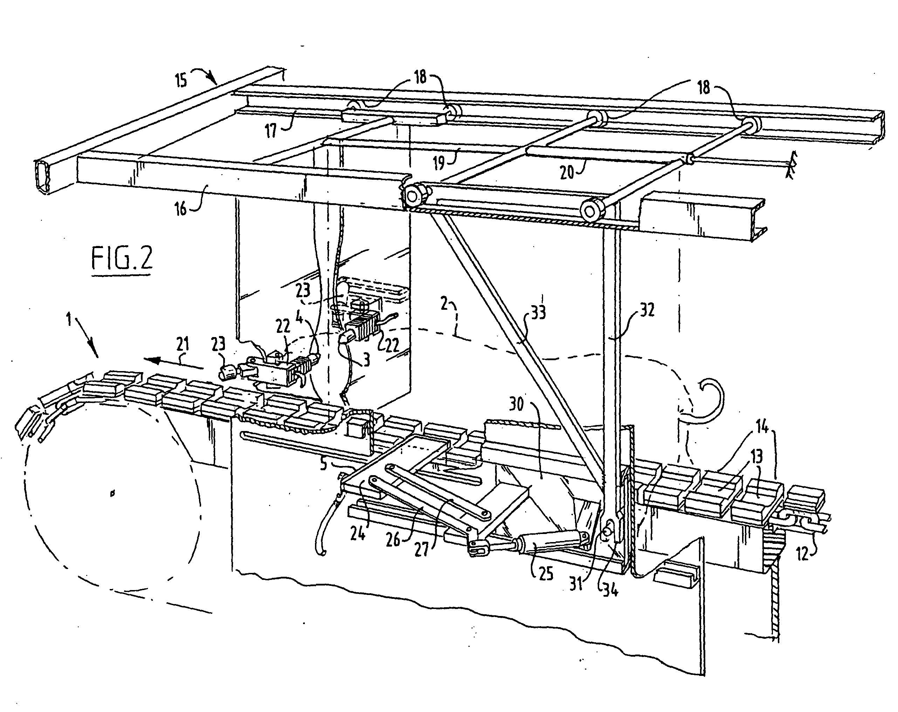

For the sake of clarity the power supply device 6 is not drawn in figure 2.

The conveyor 1 comprises a chain 12 which is driven by non-drawn means and bears blocks 14 each provided with a central longitudinal recess 13. The longitudinal recess 13 has a form such that the breast bone of pig 2 can be accommodated therein. This conveyor has a construction such that the pig remains lying docilely thereon in a fixed position.

Via a frame 15 with rails 16, 17 a carriage 19 is displacable by means of wheels 18 in lengthwise direction with conveyor 1. This carriage 19 can be driven by a cylinder 20 which is energized by non-drawn means for reciprocating displacement of carriage 19. Because the carriage 19 is driven in the transporting direction 21 at the same speed as conveyor 1 the electrodes 3, 4, 5, after having been placed in the desired position, can move along with the pig 2 for a period of time.

The electrodes 3, 4 are carried by a pivot arm 22 which is pivotable by means of cylinders 23, the driving whereof is likewise not drawn. Herewith the electrodes 3, 4 can be arranged with some force against the head of pig 2.

Electrode 5 is carried by a plate 24 which is movable toward and away from pig 2 by means of a cylinder 25. This latter engages onto an arm 26 which, together with an arm 27 parallel thereto, supports the plate 24. The electrode 5 is through plate 24 and arms 26, 27 supported by a second carriage 30 provided with a pin 31 cooperating with a driving arm 32 connected with carriage 19 for reasons of mechanical stiffness, the arm 32 is supported by a stiffening arm 33 extending between the frame 39 and the lower end of arm 32, which has a fork-shaped end 34 cooperating with pin 31. Thus, carriages 19 and 30 are driven simultaneously by cylinder 20 with the same speed as the conveyor 1 speed.

By making use of the above described constructions the electrodes 3, 4, 5 can be pressed with a sufficiently great pressure against the pig 2, whereby the transition resistance between the electrodes and the pig remains limited and a relatively high current can be realized at a relatively low voltage.

## Claims (Claims for the following Contracting State(s): BE, CH, DK, ES, FR, GB, IE, IT, U, NL, PT, SE)

1. A method for stunning an animal (2) for slaughter, e.g. a pig, comprising the steps of:
(a) providing the animal (2) for slaughter;
(b) conveying said animal (2) by means of conveying means (1) in the direction of stunning means (3, 4, 5);
(c) causing a first current pulse to flow throught the neck- and/or head-region of said animal for slaughter to stun said animal (2);
(d) causing a second current pulse to flow through the body of the animal (2) for slaughter to cause a cardiac arrest;
**characterised by**
a step (e) of carrying out step (c) in a way such that the first current pulse has a maximum duration of 10 seconds and by steps (c) and (d) being executed during step (b)."

2. Method as claimed in claim 1, **characterized in that** the second current pulse is caused to flow through the heart region.

3. Method as claimed in claim 2, **characterized in that** the second current pulse is caused to flow through the neck-and/or head-region and the heart region of the animal (2).

4. Method as claimed in claim 1, **characterized in that** step (3) has a duration of 1-2 secs.

5. Method as claimed in claim 1, **characterized in that** step (3) is carried out with an effective voltage of a maximum of 1000 V.

6. Method as claimed in claim 5, **characterized in that** step (3) is carried out with an effective voltage in the order of magnitude of 250 V.

7. Method as claimed in claim 1, **characterized in that** step (4) has a duration of a maximum of 10 secs.

8. Method as claimed in claim 7, **characterized in that** step (4) has a duration of 1-2 secs.

9. Method as claimed in claim 1, **characterized in that** the steps (3) and (4) together have a duration of 2.5-3 sees.

10. Method as claimed in claim 1, **characterized in that** step (4) is carried out with an effective voltage of a maximum of 1000 V.

11. Method as claimed in claim 9, **characterized in that** step (4) is carried out with an effective voltage in the order of magnitude of 125 V.

12. Method as claimed in claim 1, **characterized in that** the first current pulse consists of an alternating current with a frequency of a maximum of 1000 Hz.

13. Method as claimed in claim 12, **characterized in that** the first current pulse consists of a alternating current with a frequency having the value of the mains frequency.

14. Method as claimed in claim 1, **characterized in that** the second current pulse consists of an alternating current with a frequency of a maximum of 1000 Hz.

15. Method as claimed in claim 14, **characterized in that** the second current pulse consists of a an alternating current with a frequency having the value of the mains frequency.

16. A device for stunning an animal (2) for slaughter, for instance a pig, for application of the method as claimed in any of the foregoing claims, said device comprising;
(a) conveying means (1) for conveying an animal (2) for slaughter;
(b) at least one first electrode (3, 4) to be pressed against the neck- and/or head-region of the animal (2);
(c) electrical supply means (6) connected to said first electrode (3, 4) for causing a first current pulse to flow through the at least one first electrode through the neck-and/or head-region of the animal (2);
(d) at least one second electrode to be pressed against the body of the animal, said electrical supply means being also connected to said at least one second electrode for causing a second current pulse to flow via said at least one second electrode throuh the body of the animal to cause cardiac arrest
**characterised in that**
the first and second electrodes (3, 4, 5) are movable together with said conveying means (1)."

17. Device as claimed in claim 16, **characterized by** means for lowering the transition resistance between the electrodes (3, 4, 5) and the animal.

18. Device as claimed in claim 17, **characterized in that** the second electrode (5) is adapted to be pressed against the thorax region of the animal (2) such that the second current pulse is caused to flow to at least a significant degree through the heart region.

19. Device as claimed in claim 17, **characterized by** pressing means (22, 23, 25) for'pressing the electrodes (3, 4, 5) against the animal (2) with chosen forces.

20. Device as claimed in claim 16, **characterized in that** the at least one first electrode (3, 4) is carried by a first carriage (19) which can be moved reciprocally along said conveyor (1) such that said at least one first electrode (3, 4) can make contact with an animal (2) for slaughter carried by said conveyor (1) during the first current pulse having a maximum duration of 10 secs.

21. Device as claimed in claim 16, **characterized in that** said at least one second electrode forms part of the outer surface of said conveyor.

## Claims (Claims for the following Contracting State(s): DE)

1. A device for stunning an animal (2) for slaughter, for instance a pig, said device comprising:
(a) conveying means (1) for conveying an animal (2) for slaughter;
(b) at least one first electrode (3, 4) to be pressed against the neck- and/or head-region of the animal (2);
(c) electrical supply means (6) connected to said first electrode (3, 4) for causing a first current pulse to flow through the at least one first electrode through the neck-and/or head-region of the animal (2); and
(d) at least one second electrode to be pressed against the body of the animal, said electrical supply means being also connected to said at least one second electrode for causing a second current pulse to flow via said at least one second electrode through the body of the animal to cause cardiac arrest;
characterised in that
the at least one first electrode (3, 4) is carried by a first carriage (19) which can be moved reciprocally along said conveyor (1) such that said at least one first electrode (3, 4) can make contact with an animal (2) for slaughter carried by said conveyor (1) during the first current pulse having a maximum duration of 10 secs;
the second electrode (5) is carried by a second carriage (30) which can be moved reciprocally along said conveyor (1) such that said second electrode (5) can make contact with an animal (2) for slaughter carried by said conveyor (1) during the second current pulse having a maximum duration of 10 secs; and
said first and second carriages (19, 30) are coupled for simultaneous reciprocating movement along said conveyor (1), and
said first carriage (19) is also said second carriage (30).

2. Device as claimed in claim 1, characterized by means for lowering the transition resistance between the electrodes (3, 4, 5) and the animal.

3. Device as claimed in claim 2, characterized in that the second electrode (5) is adapted to be pressed against the thorax region of the animal (2) such that the second current pulse is caused to flow to at least a significant degree through the heart region.

4. Device as claimed in claim 2, characterized by pressing means (22, 23, 25) for pressing the electrodes (3, 4, 5) against the animal (2) with chosen forces.

5. Device as claimed in claim 1, characterized in that said at least one second electrode forms part of the outer surface of said conveyor.

## Patentansprüche (Patentansprüche für folgende(n) Vertragsstaat(en): BE, CH, DK, ES, FR, GB, IE, IT, LI, NL, PT, SE)

1. Verfahren zum Betäuben eines Schlachttieres (2), z. B. eines Schweines, mit den Schritten:
a) Bereitstellen des Schlachttieres (2);
b) Fördern des Tieres (2) mittels eines Fördermittels (1) in die Richtung eines Betäubungsmittels (3,4,5); Verursachen, daß ein erster Strompuls durch den Hals- und/oder Kopfbereich des Schlachttieres zum Betäuben des Tieres (2) fließt;
d) Verursachen, daß ein zweiter Strompuls durch den Körper des Schlachttieres (2) zum Verursachen eines Herzstillstandes fließt;
gekennzeichnet durch
einen Schritt (e) des Ausführens des Schrittes (c) auf eine solche Weise, daß der erste Stromstoß eine maximale Dauer von 10 Sekunden aufweist, und wobei die Schritte (c) und (d) während des Schrittes (b) ausgeführt werden.

2. Verfahren nach Anspruch 1, dadurch gekennzeichnet, daß der zweite Strompuls durch den Herzbereich fließt.

3. Verfahren nach Anspruch 2, dadurch gekennzeichnet, daß verursacht wird, daß der zweite Strompuls durch den Hals-und/oder Kopfbereich und den Herzbereich des Tieres (2) fließt.

4. Verfahren nach Anspruch 1, dadurch gekennzeichnet, daß der Schritt (3) eine Dauer von 1 bis 2 Sekunden aufweist.

5. Verfahren nach Anspruch 1, dadurch gekennzeichnet, daß der Schritt (3) mit einer effektiven Spannung von einem Maximum von 1000V ausgeführt wird.

6. Verfahren nach Anspruch 1, dadurch gekennzeichnet, daß der Schritt mit einer effektiven Spannung in der Größenordnung von 250V ausgeführt wird.

7. Verfahren nach Anspruch 1, dadurch gekennzeichnet, daß der Schritt (4) eine Dauer von 10 Sekunden aufweist.

8. Verfahren nach Anspruch 7, dadurch gekennzeichnet, daß der Schritt (4) eine Dauer von 1 bis 2 Sekunden aufweist.

9. Verfahren nach Anspruch 1, dadurch gekennzeichnet, daß die Schritte (3 und 4) zusammen einer Dauer von 2,5 bis 3 Sekunden aufweisen.

10. Verfahren nach Anspruch 1, dadurch gekennzeichnet, daß der Schritt (4) mit einer effektiven Spannung von einem Maximum von 1000V ausgeführt wird.

11. Verfahren nach Anspruch 9, dadurch gekennzeichnet, daß der Schritt (4) mit einer effektiven Spannung in der Größenordnung von 125V ausgeführt wird.

12. Verfahren nach Anspruch 1, dadurch gekennzeichnet, daß der erste Strompuls aus einem Wechselstrom mit einer Frequenz von einem Maximum von 100Hz besteht.

13. Verfahren nach Anspruch 12, dadurch gekennzeichnet, daß der erste Strompuls aus einem Wechselstrom mit einer Frequenz mit dem Wert der Leitungsfrequenz besteht.

14. Verfahren nach Anspruch 1, dadurch gekennzeichnet, daß der zweite Strompuls aus einem Wechselstrom mit einer Frequenz von einem Maximum von 1000Hz besteht.

15. Verfahren nach Anspruch 14, dadurch gekennzeichnet, daß der zweite Strompuls aus einem Wechselstrom mit einer Frequenz mit dem Wert der Leitungsfrequenz besteht.

16. Vorrichtung zum Betäuben eines Schlachttieres (2), z. B. eines Schweines, zum Anwenden des Verfahrens nach einem der vorhergehenden Ansprüche, wobei die Vorrichtung aufweist:
a) ein Fördermittel (1) zum Fördern eines Schlachttieres (2);
b) mindestens eine gegen den Hals- und/oder Kopfbereich des Tieres (2) zu drückenden erste Elektrode (3,4);
c) ein elektrisches Versorgungsmittel (6), das mit der ersten Elektrode (3,4) zum Verursachen verbunden ist, daß ein erster Strompuls durch die mindestens eine erste Elektrode durch den Hals- und/oder Kopfbereich des Tieres (2) fließt;
d) mindestens eine gegen den Körper des Tieres zu drückenden zweite Elektrode, wobei das elektrische Versorgungsmittel ebenfalls mit der mindestens einen zweiten Elektrode zum Verursachen verbunden ist, daß ein zweiter Strompuls über die mindestens eine zweite Elektrode durch den Körper des Tieres zum Verursachen eines Herzstillstandes fließt;
dadurch gekennzeichnet,
daß die erste und die zweite Elektrode (3,4,5) zusammen mit dem Fördermittel (1) bewegbar sind.

17. Vorrichtung nach Anspruch 16, gekennzeichnet durch ein Mittel zum Senken des Übergangswiderstandes zwischen den Elektroden (3,4,5) und dem Tier.

18. Vorrichtung nach Anspruch 17, dadurch gekennzeichnet, daß die zweite Elektrode (5) ausgelegt ist, um gegen den Brustbereich des Tieres (2) derart gepresst zu werden, daß verursacht wird, daß der zweite Strompuls zu mindestens in einem wesentlichen Grad durch den Herzbereich fließt.

19. Vorrichtung nach Anspruch 17, gekennzeichnet durch ein Pressmittel (22,23,25) zum Pressen der Elektroden (3,4,5) gegen das Tier (2) mit gewählten Kräften.

20. Vorrichtung nach Anspruch 16, dadurch gekennzeichnet, daß mindestens eine erste Elektrode (3,4) von einem ersten Wagen (19) getragen ist, der entlang des Fördermittels (1) hin- und herbewegt werden kann, so daß die mindestens eine erste Elektrode (3,4) einen Kontakt mit einem Schlachttier (2) herstellen kann, daß von dem Fördermittel (1) getragen wird, während des ersten Strompulses, der eine maximale Dauer von 10 Sekunden hat.

21. Vorrichtung nach Anspruch 16, dadurch gekennzeichnet, daß die mindestens eine Elektrode einen Teil der äußeren Oberfläche des Fördermittels bildet.

## Patentansprüche (Patentansprüche für folgende(n) Vertragsstaat(en): DE)

1. Vorrichtung zum Betäuben eines Schlachttieres (2), z. B. eines Schweines, wobei die Vorrichtung aufweist:
a) ein Fördermittel (1) zum Befördern eines Schlachttieres (2);
b) mindestens eine erste Elektrode (3,4), die gegen den Hals- und/oder Kopfbereich des Tieres 2) zu drücken ist;
c) ein elektrisches Versorgungsmittel (6), dass mit der ersten Elektrode (3,4) verbunden ist, um zu verursachen, dass ein erster Strompuls durch die mindestens eine erste Elektrode durch den Hals- und/oder Kopfbereich des Tieres (2) fließt; und
d) mindestens eine zweite Elektrode, die gegen den Körper des Tieres zu drücken ist, wobei das elektrische Versorgungsmittel ebenfalls mit der mindestens einen zweiten Elektrode verbunden ist, um zu verursachen, dass ein zweiter Strompuls über die mindestens einer zweite Elektrode durch den Körper des Tieres fließt, um einen Herzstillstand zu verursachen;
dadurch gekennzeichnet, das die mindestens eine erste Elektrode (3,4) von einem ersten Wagen (19) getragen wird, der entlang des Fördermittels (1) hin- und her bewegt werden kann, so daß die mindestens eine erste Elektrode (3,4) einen Kontakt mit einem Schlachttier (2) herstellen kann, das von dem Fördermittel (1) getragen wird, während des ersten Strompulses, der eine maximale Dauer von 10 Sekunden hat; die zweite Elektrode (5) von einem zweiten Wagen (30) getragen wird, der entlang des Fördermittels (1) hin- und her bewegt werden kann, so daß die zweite Elektrode (5) einen Kontakt mit einem Schlachttier (2) herstellen kann, das von dem Fördermittel (1) getragen wird, während des zweiten Strompulses, der eine maximale Dauer von 10 Sekunden hat; und
daß die ersten und zweiten Wagen (19,30) für eine gleichzeitige hin und hergehende Bewegung entlang des Fördermittels (1) gekoppelt sind, und daß der erste Wagen (19) auch der zweite Wagen (30) ist.

2. Vorrichtung gemäß Anspruch 1, gekennzeichnet durch ein Mittel zum Absenken des Übertragungswiderstandes zwischen den Elektroden (3,4,5) und dem Tier.

3. Vorrichtung gemäß Anspruch 2, dadurch gekennzeichnet, daß die zweite Elektrode (5) dazu angepasst ist, gegen den Brustbereich des Tieres (2) gepresst zu werden, so daß der zweite Strompuls dazu gebracht wird, wenigstens in einem signifikanten Grad durch den Herzbereich zu fließen.

4. Vorrichtung gemäß Anspruch 2, gekennzeichnet durch eine Pressvorrichtung (22,23,25), um die Elektroden (3,4,5) mit ausgewählten Kräften gegen das Tier (2) zu pressen.

5. Vorrichtung gemäß Anspruch 1, dadurch gekennzeichnet, daß die wenigstens eine zweite Elektrode einen Teil der äußeren Oberfläche des Fördermittels bildet.

## Revendications (Revendications pour l'(les) Etat(s) contractant(s) suivant(s): BE, CH, DK, ES, FR, GB, IE, IT, LI, NL, PT, SE)

1. Procédé pour assommer un animal (2) à abattre, par exemple un porc, comprenant les étapes consistant à :
(a) amener l'animal (2) à abattre ;
(b) transporter ledit animal (2) au moyen de moyens de convoyage (1) dans la direction des moyens d'assommage (3, 4, 5);
(c) faire passer une première impulsion de courant à travers la région du cou et/ou de la tête dudit animal à abattre pour assommer ledit animal (2);
(d) faire passer une deuxième impulsion de courant dans le corps de l'animal (2) à abattre pour provoquer un arrêt cardiaque ;
caractérisé par
une étape (e) consistant à effectuer l'étape (c) de telle manière que la première impulsion de courant a une durée maximale de 10 secondes, et par le fait que les étapes (c) et (d) sont exécutées au cours de l'étape (b).

2. Procédé selon la revendication 1, caractérisé en ce que la deuxième impulsion de courant est envoyée à travers la région du coeur.

3. Procédé selon la revendication 2, caractérisé en ce que la deuxième impulsion de courant est envoyée à travers la région du cou et/ou de la tête et la région du coeur de l'animal (2).

4. Procédé selon la revendication 1, caractérisé en ce que l'étape (c) a une durée de 1-2 secondes.

5. Procédé selon la revendication 1, caractérisé en ce que l'étape (c) est effectuée avec une tension efficace d'au plus 1000 V.

6. Procédé selon la revendication 5, caractérisé en ce que l'étape (c) est effectuée avec une tension efficace de l'ordre de 250 V.

7. Procédé selon la revendication 1, -caractérisé en ce que l'étape (d) a une durée d'au plus 10 secondes.

8. Procédé selon la revendication 7, caractérisé en ce que l'étape (d) a une durée de 1-2 secondes.

9. Procédé selon la revendication 1, caractérisé en ce que les étapes (c) et (d) ont en commun une durée de 2,5-3 secondes.

10. Procédé selon la revendication 1, caractérisé en ce que l'étape (d) est effectuée avec une tension efficace d'au plus 1000 V.

11. Procédé selon la revendication 9, caractérisé en ce que l'étape (4) est effectuée avec une tension efficace de l'ordre de 125 V.

12. Procédé selon la revendication 1, caractérisé en ce que la première impulsion de courant est constituée d'un courant alternatif d'une fréquence d'au plus 1000 Hz.

13. Procédé selon la revendication 12, caractérisé en ce que la première impulsion de courant est constituée d'un courant alternatif d'une fréquence ayant la valeur de la fréquence du secteur.

14. Procédé selon la revendication 1, caractérisé en ce que la deuxième impulsion de courant est constituée d'un courant alternatif d'une fréquence d'au plus 1000 Hz.

15. Procédé selon la revendication 14, caractérisé en ce que la deuxième impulsion de courant est constituée d'un courant alternatif d'une fréquence ayant la valeur de la fréquence du secteur.

16. Dispositif pour assommer un animal (2) à abattre, par exemple un porc, afin d'appliquer le procédé décrit ci-dessus, ledit dispositif comprenant :
(a) des moyens de convoyage (1) pour transporter un animal (2) à abattre ;
(b) au moins une première électrode (3, 4) à presser contre la région du cou et/ou de la tête de l'animal (2) ;
(c) des moyens d'alimentation électrique (6) connectés à ladite première électrode (3, 4) pour faire passer une première impulsion de courant dans ladite électrode au nombre d'au moins une à travers la région du cou et/ou de la tête de l'animal (2) ;
(d) au moins une deuxième électrode à presser contre le corps de l'animal, lesdits moyens d'alimentation électrique étant également connectés à ladite deuxième électrode au nombre d'au moins une pour faire passer une deuxième impulsion de courant via ladite deuxième électrode au nombre d'au moins une à travers le corps de l'animal pour provoquer un arrêt cardiaque ;
caractérisé en ce que
les première et deuxième électrodes (3, 4, 5) sont mobiles avec les moyens de convoyage (1).

17. Dispositif selon la revendication 16, caractérisé par des moyens pour abaisser la résistance de passage entre les électrodes (3, 4, 5) et l'animal.

18. Dispositif selon la revendication 17, caractérisé en ce que la deuxième électrode (5) est adaptée pour être pressée contre la région du thorax de l'animal (2) en sorte que la deuxième impulsion de courant est envoyée au moins dans une certaine mesure à travers la région du coeur.

19. Dispositif selon la revendication 17, caractérisé par des moyens de pressage (22, 23, 25) destinés à presser les électrodes (3, 4, 5) contre l'animal (2) avec des forces choisies.

20. Dispositif selon la revendication 16, caractérisé en ce que la première électrode au nombre d'au moins une (3, 4) est portée par un premier chariot (19) qui peut être déplacé en va-et-vient le long dudit convoyeur (1), de sorte que ladite première électrode au nombre d'au moins une (3, 4) peut établir un contact avec un animal (2) à abattre porté par ledit convoyeur (1) pendant la première impulsion de courant, qui a une durée maximale de 10 secondes.

21. Dispositif selon la revendication 16, caractérisé en ce que ladite deuxième électrode au nombre d'au moins une fait partie de la surface extérieure dudit convoyeur.

## Revendications (Revendications pour l'(les) Etat(s) contractant(s) suivant(s): DE)

1. Dispositif pour assommer un animal (2) à abattre, par exemple un porc, le dispositif comprenant :
(a) des moyens de convoyage (1) pour amener un animal à abattre ;
(b) au moins une première électrode (3, 4) destinée à être pressée contre la région du cou et/ou la tête de l'animal (2) ;
(c) des moyens d'alimentation électrique (6) connectés à ladite première électrode (3, 4) pour faire passer une première impulsion de courant à travers ladite au moins une première électrode et la région du cou et/ou de la tête dudit animal (2) à abattre pour assommer ledit animal (2) ;
(d) au moins une deuxième électrode destinée à être pressée contre le corps de l'animal, lesdits moyens d'alimentation étant également connectés à ladite au moins deuxième électrode pour faire passer une deuxième impulsion de courant à travers ladite au moins deuxième électrode et dans le corps de l'animal à abattre pour provoquer un arrêt cardiaque ;
caractérisé en ce que
la première électrode au nombre d'au moins une (3, 4) est portée par un premier chariot (19) qui peut être déplacé en va-et-vient le long dudit convoyeur (1), de sorte que ladite première électrode au nombre d'au moins une (3, 4) peut établir un contact avec un animal (2) à abattre porté par ledit convoyeur (1) pendant la première impulsion de courant, qui a une durée maximale de 10 secondes ;
la deuxième électrode (5) est portée par un deuxième chariot (30) qui peut être déplacé en va-et-vient le long dudit convoyeur (1), de sorte que ladite deuxième électrode (5) peut établir un contact avec un animal (2) à abattre porté par ledit convoyeur (1) pendant la deuxième impulsion de courant, qui a une durée maximale de 10 secondes ; et
lesdits premier et deuxième chariots (19, 30) sont couplés pour se déplacer simultanément en va-et-vient le long dudit convoyeur (1), et ledit premier chariot (19) est également ledit deuxième chariot (30).

2. Dispositif selon la revendication 1, caractérisé par des moyens pour abaisser la résistance de passage entre les électrodes (3, 4, 5) et l'animal.

3. Dispositif selon la revendication 2, caractérisé en ce que la deuxième électrode (5) est adaptée pour être pressée contre la région du thorax de l'animal (2) en sorte que la deuxième impulsion de courant est envoyée au moins dans une certaine mesure à travers la région du coeur.

4. Dispositif selon la revendication 2, caractérisé par des moyens de pressage (22, 23, 25) destinés à presser les électrodes (3, 4, 5) contre l'animal (2) avec des forces choisies.

5. Dispositif selon la revendication 1, caractérisé en ce que ladite deuxième électrode au nombre d'au moins une fait partie de la surface extérieure dudit convoyeur.
